# EUROPEAN PATENT APPLICATION

(11) **EP 4 687 303 A1**
(43) Date of publication of application: **04.02.2026**
(21) Application number: 25179350.1
(22) Date of filing: 28.05.2025
(51) Int. Cl.: H04B 5/43, H04B 5/73

(54) **CIRCUIT UNITS FOR IMPLEMENTING NEAR FIELD COMMUNICATION AND NFC DEVICES**

(30) Priority: 02.08.2024 CN 202411063019
(71) Applicant: Advanced Nova Technologies (Singapore) Holding Pte. Ltd., Singapore 189773 (SG)
(72) Inventor: DAI, Yuhua, Hangzhou, 310000 (CN)
(74) Representative: Winter, Brandl - Partnerschaft mbB

(57) **Abstract**

This specification provides a circuit unit for implementing near field communication and an NFC device. The solution includes an NFC antenna, an NFC chip, and an excitation circuit, where the NFC antenna is connected to the NFC chip, the NFC chip is connected to the excitation circuit, and the NFC chip is configured to: obtain first energy in a case that the NFC antenna senses a radio frequency field of a user terminal device, and provide a part of the first energy to the excitation circuit; and the excitation circuit is configured to generate and send an excitation signal by using energy obtained from the NFC chip, wherein the excitation signal is used to excite the user terminal device to communicate with a device comprising the circuit unit.

## Description

### TECHNICAL FIELD

This specification relates to the field of near field communication technologies, and in particular, to circuit units for implementing near field communication and NFC devices.

### BACKGROUND

As a short-range wireless communication protocol, a near field communication (NFC) technology is widely used in multiple fields such as mobile payment, information exchange, intelligent home control, access control, identity authentication and identification, electronic ticket services, and anti-counterfeiting. Devices involved in NFC can include an NFC initiating device and an NFC target device. The NFC initiating device (also referred to as a primary device) needs a power supply device. The primary device provides a radio frequency field by using energy of the power supply device, and sends data to the NFC target device (also referred to as a secondary device). A transmission rate needs to be selected from 106 kbps, 212 kbps, or 424 kbps. The secondary device does not generate a radio frequency field, and may not need a power supply device. Instead, the secondary device supplies power to a circuit of the secondary device by using electric energy converted from the radio frequency field generated by the primary device, receives data sent by the primary device, and transmits data of the secondary device to the primary device at the same transmission rate by using a load modulation technology.

In practice, when a mobile terminal device such as a smartphone is used as an NFC primary device, to control power consumption, the NFC primary device has many low-power designs on transmit power of a card reader etc. of the NFC primary device. Therefore, for a peer target device, a good communication success rate can be obtained only by interacting with the mobile terminal device by using an active power supply solution, but power consumption is high and costs are high. However, if a low-cost passive solution is used, the communication success rate is often very low. Consequently, large-scale promotion and application of a near field communication manner in which a mobile terminal device such as a smartphone is used as an NFC primary device is hindered.

In view of this, a near field communication solution with low power consumption and a high success rate needs to be provided.

### SUMMARY

In view of this, embodiments of this specification provide a circuit unit for implementing near field communication and an NFC device, so as to increase a success rate of near field communication under a low power consumption condition.

According to a first aspect of the embodiments of this specification, a circuit unit for implementing near field communication is provided, including an NFC antenna, an NFC chip, and an excitation circuit, where the NFC antenna is connected to the NFC chip, the NFC chip is connected to the excitation circuit, and the NFC chip is configured to: obtain first energy in a case that the NFC antenna senses a radio frequency field of a user terminal device, and provide a part of the first energy to the excitation circuit; and the excitation circuit is configured to generate and send an excitation signal by using energy obtained from the NFC chip, wherein the excitation signal is used to excite the user terminal device to communicate with a device comprising the circuit unit.

According to a second aspect of the embodiments of this specification, an NFC device is provided, including a circuit unit for implementing near field communication, where the circuit unit includes an NFC antenna, an NFC chip, and an excitation circuit, where the NFC antenna is connected to the NFC chip, the NFC chip is connected to the excitation circuit, and the NFC chip is configured to: obtain first energy in a case that the NFC antenna senses a radio frequency field of a user terminal device, and provide a part of the first energy to the excitation circuit; and the excitation circuit is configured to generate and send an excitation signal by using energy obtained from the NFC chip, wherein the excitation signal is used to excite the user terminal device to communicate with a device comprising the circuit unit.

In an embodiment of this specification, at least the following beneficial effects can be achieved: An excitation circuit is disposed, and energy is obtained by using an NFC chip in a case that an NFC antenna senses a radio frequency field of a user terminal device, and is provided to the excitation circuit, so the excitation circuit transmits an excitation signal used to excite the user terminal device to switch to a standard card detection mode, so as to perform near field communication, thereby increasing a success rate of near field communication in a low power consumption manner.

### BRIEF DESCRIPTION OF DRAWINGS

To describe the technical solutions in some embodiments of this specification or in an existing technology more clearly, the following briefly describes the accompanying drawings needed for describing the embodiments or the existing technology. Clearly, the accompanying drawings in the following descriptions merely show some embodiments of this specification, and a person of ordinary skill in the art can still derive other drawings from these accompanying drawings without creative efforts.
FIG. 1 is a schematic diagram of an application scenario of a circuit unit for implementing near field communication according to an embodiment of this specification;
FIG. 2 is a schematic diagram of a circuit unit for implementing near field communication according to an embodiment of this specification;
FIG. 3 is a detailed schematic diagram of a circuit unit for implementing near field communication according to an embodiment of this specification;
FIG. 4 is a schematic diagram of another circuit unit for implementing near field communication according to an embodiment of this specification;
FIG. 5 is a schematic diagram of still another circuit unit for implementing near field communication according to an embodiment of this specification;
FIG. 6 is a schematic diagram of yet another circuit unit for implementing near field communication according to an embodiment of this specification;
FIG. 7 is a scenario schematic diagram of an actual application scenario in which a circuit unit for implementing near field communication and a user terminal device working in an active mode perform near field communication according to an embodiment of this specification;
FIG. 8 is a schematic structural diagram of a metal sheet used for an NFC antenna according to an embodiment of this specification;
FIG. 9 is a schematic structural diagram of another metal sheet used for an NFC antenna according to an embodiment of this specification;
FIG. 10 is a schematic diagram of an NFC antenna including a metal sheet and a metal coil according to an embodiment of this specification; and
FIG. 11 is a schematic diagram of another NFC antenna including a metal sheet and a metal coil according to an embodiment of this specification.

### DESCRIPTION OF EMBODIMENTS

Many specific details are described in the following descriptions to facilitate full understanding of this specification. However, this specification can be implemented by using many different methods from those described here. A person skilled in the art can perform similar promotion without departing from the intension of this specification. Therefore, this specification is not limited to the specific implementation disclosed below.

Terms used in one or more embodiments of this specification are merely used to describe specific embodiments, and are not intended to limit the one or more embodiments of this specification. The terms "a" and "the" of singular forms used in one or more embodiments of this specification and the appended claims are also intended to include plural forms, unless otherwise specified in the context clearly. It should be further understood that the term "and/or" used in one or more embodiments of this specification indicates to and includes any or all possible combinations of one or more associated listed items.

It should be understood that although terms "first", "second", etc. can be used in one or more embodiments of this specification to describe various types of information, the information is not limited to these terms. These terms are merely used to distinguish between information of the same type. For example, the first can also be referred to as the second without departing from the scope of the one or more embodiments of this specification, and similarly, the second can be referred to as the first. Depending on the context, the word "if" used here can be interpreted as "when" or "while" or "in response to determining".

It is worthwhile to note that user information (including but not limited to user equipment information, personal user information, etc.) and data (including but not limited to data used for analysis, stored data, displayed data, etc.) in this specification are information and data that are authorized by a user or that are fully authorized by each party. Furthermore, related data needs to be collected, used, and processed in compliance with relevant laws, regulations and standards of relevant regions, and corresponding operation entries are provided for the user to choose to authorize or reject.

First, terms in one or more implementations of this specification are explained.

NFC: Near Field Communication is a short-range high-frequency wireless communication technology.

NFC active mode: is also referred to as a card reader mode. In the active mode, an NFC device can be used as a card reader to send a radio frequency field to identify and read/write passive NFC device information. The NFC device in the active mode can be referred to as an active NFC device or an NFC primary device.

NFC passive mode: is also referred to as a card simulation mode. In the passive mode, an NFC device is simulated as a card, and can passively respond in a radio frequency field sent by another device, and information can be read therefrom/information can be written thereto. The NFC device in the passive mode can be referred to as a passive NFC device or an NFC secondary device.

LPCD mode: is a low power card detection mode or a low power card searching mode, where LPCD represents low power card detection. LPCD is a technology used to efficiently detect a neighboring contactless smart card or tag in an NFC technology, and is mainly used to reduce power consumption of an NFC card reader while waiting for the smart card or tag to approach. The NFC card reader in the LPCD mode can periodically send a low power pulse. When detecting that a signal amplitude on an antenna changes and exceeds a predetermined threshold, the NFC card reader can determine that an NFC device is approaching, so as to start a further interaction process. Specifically, when a card enters a radio frequency field, existence of the card causes amplitude and phase changes of a signal. In the LPCD mode, a software-based card detection mechanism can be used to detect these changes, and in-phase (I) and quadrature (Q) components of a received signal are analyzed to determine whether a card is approaching, so as to trigger further NFC communication. In a portable device such as a mobile phone, the LPCD mode is particularly important, and a main advantage thereof is a low power consumption characteristic. A mobile phone usually needs to be in standby for a long time, and frequent activation of an NFC function can significantly consume a battery. The LPCD mode allows the mobile phone to continuously detect an NFC signal in the background while maintaining a low energy consumption level. Once a card is detected, the mobile phone can quickly switch from a low power state to a fully functional state to perform an NFC transaction or data exchange.

Standard card detection mode: is also referred to as a normal card detection mode or a normal card searching mode. To increase a rate and a success rate of NFC communication, generally, the NFC card reader is in the fully functional state when performing NFC communication, that is, the standard card detection mode. In practice, in both the LPCD mode and the standard card detection mode, the NFC card reader (for example, a mobile terminal device such as a mobile phone) sends a sine wave of 13.56 MHz, and a difference lies in that sending time and amplitudes of the sine wave are different in the LPCD mode and the standard card detection mode. For example, in the LPCD mode, a pulse width is usually at a µs level, while in the standard card detection mode, the pulse width is usually at a level of dozens of ms.

NFC tag: is short for near field communication tag, which is a small device based on a near field communication technology, and can implement data exchange between devices within a short range. The NFC tag generally includes a micro chip and an antenna. The chip stores information (for example, an ID and a URL), and the antenna is responsible for receiving and sending data. The NFC tag is a passive device, and can work without an external power supply. In practice, when an NFC card reader (for example, an intelligent mobile device supporting an NFC function) approaches the NFC tag, a magnetic field generated by the NFC card reader is sensed by the antenna of the tag, so sufficient electric power is generated to activate the chip in the tag, and the tag can send information stored thereon.

The NFC technology is widely used in multiple fields such as mobile payment, information exchange, intelligent home control, access control, identity authentication and identification, electronic ticket services, and anti-counterfeiting. For example, in the mobile payment field, payment manners based on the NFC technology are currently flourishing abroad and domestically.

In the mobile payment scenario, currently, a mainstream NFC-based payment manner is that a cash register device as a payment collection end serves as a card reader working in an active mode, and implements payment by reading passively simulated information on a mobile device as a payment end. However, all electronic wallets used by a consumer are provided by a mobile device manufacturer. To use an NFC payment function of the mobile device, a user needs to enable various wallets according to a requirement of the mobile device manufacturer, which is not easy to manage and has an information security risk. In addition, currently not all mobile device models support passive card simulation functions such as financial payment. Therefore, large-scale popularization and application of an NFC payment manner in which the mobile device works in the passive mode are limited. In view of this, the mobile device needs to be enabled to work in the active mode.

However, when the mobile device works in an NFC payment manner in the active mode, currently, there are some problems in practice. Specifically, the mobile device is usually powered by a battery, and is sensitive to power consumption. To control power consumption, many low power designs such as the LPCD mode are generally implemented on transmit power of a card reader of the mobile device. For example, when a screen of the mobile phone is off, a card read function is usually disabled, and most mobile phones automatically enter the LPCD mode after the screen is on for a period of time. When the mobile device in the LPCD mode is approaching a peer NFC target device, the mobile device can switch to the standard card detection mode. In practice, only when the mobile device senses that a strength change of a radio frequency signal transmitted by the mobile device when sensed by the peer NFC target device that the mobile device is approaching is greater than or equal to a predetermined threshold, the mobile device is woken up from the LPCD mode, and enters the standard card detection mode. However, in the LPCD mode, signal strength sent by the mobile device is relatively weak, and an amplitude of a transmitted radio frequency signal decreases compared with that in the standard card detection mode. Therefore, an impact amplitude of the peer NFC target device on the signal also correspondingly decreases, so the mobile device cannot determine, by using a change amplitude of the signal, whether an NFC target device exists around, thereby preventing the mobile device from obtaining a correct determining result and switching to the standard card detection mode. Consequently, a success rate of sensing the NFC target device by the mobile device decreases clearly, which further affects a success rate of near field communication, and affects user experience.

For example, a smartphone as an NFC primary device performs near field communication with a cash register device. In a related technology, a peer end can obtain a good communication success rate only by interacting with the mobile phone by using an active device. However, an active cash register device not only consumes high power, but also has high design complexity and costs and high costs of offline rollout, which is not conducive to wide promotion. However, for low-cost and passive payment solutions, a communication success rate is often very low (for example, at present, a communication success rate of a payment solution based on a passive solution is less than 70%, and for some mobile device models, even less than 50%), and a relatively low success rate also hinders promotion of the payment mode.

In view of this, embodiments of this specification provide a passive low-power near field communication solution applied to an NFC secondary device. An excitation circuit is disposed, and a part of energy obtained by an NFC chip in a case that an NFC antenna senses a radio frequency field of a user terminal device is provided to the excitation circuit, so the excitation circuit sends an excitation signal to excite the user terminal device to communicate with the NFC secondary device. As such, a near field communication success rate can be increased with low power consumption and low costs, thereby facilitating convenient production, promotion, and application of an NFC payment product as an NFC secondary device.

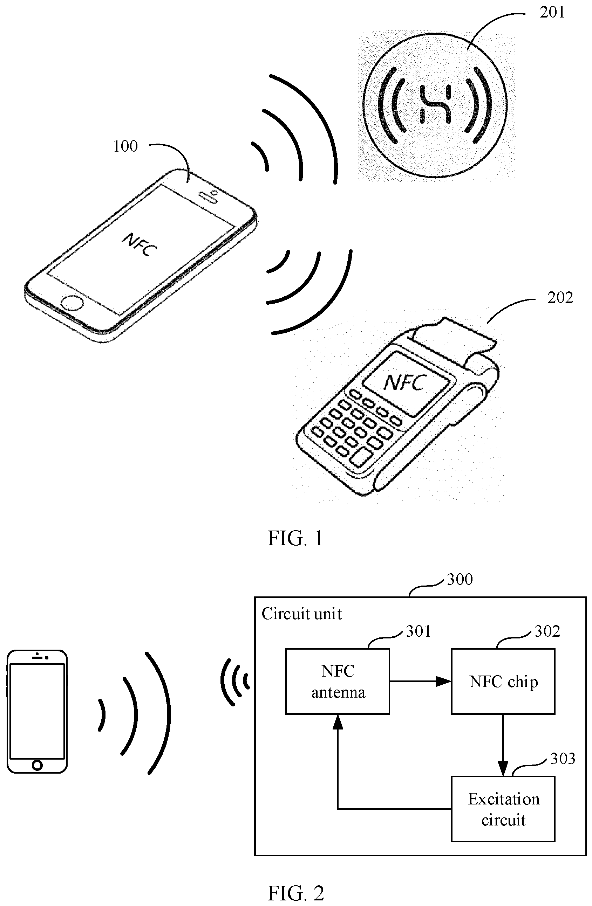

FIG. 1 is a schematic diagram of an application scenario of a circuit unit for implementing near field communication according to an embodiment of this specification.

As shown in FIG. 1, when a mobile terminal device 100 having an NFC function is approaching an NFC tag 201 or a payment collection terminal device 202 having an NFC function, near field communication can be performed with the NFC tag 201 or the payment collection terminal device 202. Therefore, the mobile terminal device 100 can obtain information provided by the NFC tag 201 or the payment collection terminal device 202. In this process, the mobile terminal device 100 works in an active mode, and the NFC tag 201 or the payment collection terminal device 202 works in a passive mode.

Although FIG. 1 shows that an NFC primary device that initiates NFC communication is the mobile terminal device 100 of a smartphone type, in practice of the solution in this specification, the NFC primary device can further include but is not limited to a smart wearable device such as a smart watch or smart glasses. Although FIG. 1 shows that an NFC secondary device is the NFC tag 201 or the payment collection terminal device 202, in practice of the solution in this specification, the NFC secondary device can further include but is not limited to an electronic door lock, a payment code card, an access control gate, etc.

In an actual application, the NFC primary device such as the mobile terminal device 100 can transmit a radio frequency field, and the NFC secondary device such as the NFC tag 201 or the payment collection terminal device 202 can respond in a case of sensing a near field communication signal transmitted by the NFC primary device, so as to send service information to the mobile terminal device 100. The service information can vary according to an application scenario. For example, in a payment scenario, the service information can include payment order information. For another example, in a food ordering scenario, the service information can include a uniform resource locator used to open an ordering page. For another example, in product traceability, the service information can include product description information.

The circuit unit for implementing near field communication provided in the solution in this embodiment of this specification can be installed in the NFC secondary device such as the NFC tag 201 or the payment collection terminal device 202 shown in FIG. 1. The NFC device provided in the solution in this embodiment of this specification can be used as the NFC tag 201 or the payment collection terminal device 202 shown in FIG. 1.

In the solution provided in this embodiment of this specification, in the circuit unit for implementing near field communication, an energy recovery capability of an NFC chip itself for a radio frequency field of an approaching user terminal device is used, and recovered energy is provided to an excitation module, so the user terminal device is excited by the excitation module, and the user terminal device can sense existence of an NFC secondary device (the NFC secondary device includes the circuit unit provided in this embodiment of this specification), so as to perform normal near field communication with the NFC secondary device.

In one or more embodiments of this specification, a circuit unit for implementing near field communication is provided.

FIG. 2 is a schematic diagram of a circuit unit 300 for implementing near field communication according to an embodiment of this specification.

As shown in FIG. 2, specifically, the circuit unit 300 for implementing near field communication can include an NFC antenna 301, an NFC chip 302, and an excitation circuit 303. The NFC chip 302 can be connected to the NFC antenna 301, and the NFC chip 302 can be connected to the excitation circuit 303.

The NFC chip 302 and the NFC antenna 301 connected thereto can have a signal sending and receiving capability and a signal modulation and demodulation capability. Specifically, the NFC chip 302 and the NFC antenna 301 connected thereto can work in a passive mode, and directly communicate with a peer user terminal device (for example, a smartphone) that works in an active mode.

A communication carrier frequency of the near field communication (NFC) technology is 13.56 MHz. This frequency is standardized worldwide, so NFC devices of different manufacturers can be compatible with each other. The frequency of 13.56 MHz is selected to ensure efficient and secure data exchange within a short range (usually several centimeters to about 20 centimeters). A radio frequency field whose communication carrier frequency is 13.56 MHz has a capability of providing an energy field. A radio frequency field transmitted by an NFC primary device working in an active mode can generally provide energy for an NFC secondary device. The NFC secondary device working in a passive mode can directly work and complete communication with the NFC primary device by using the energy provided by the NFC primary device. In this embodiment of this specification, the NFC chip 302 and the NFC antenna 301 connected thereto can be provided by a commercially available chip, for example, an NTAG5LINK chip from NXP, an FM11NT082C chip from FMSH, and a related chip from a manufacturer such as ST, and are not limited to these examples.

In this embodiment of this specification, considering that the user terminal device can be in an LPCD mode, and it is relatively difficult to successfully communicate with the user terminal device and it is difficult to wake up the user terminal device, to increase a communication success rate, energy recovered by the NFC chip 302 that works in the passive mode can be provided to the excitation circuit 303, and the excitation circuit 303 transmits an active radio frequency field to excite the user terminal device, so the user terminal device switches to a standard card detection mode and performs near field communication data exchange, thereby increasing the near field communication success rate.

As shown in FIG. 2, the excitation circuit 303 is disposed in the circuit unit 300 for implementing near field communication. Specifically, the NFC chip 302 can be electrically connected to the excitation circuit 303. Therefore, the NFC chip 302 can provide the excitation circuit 303 with a part of energy recovered by the NFC antenna 301 based on an approaching radio frequency field, so the excitation circuit 303 works. In practice, the NFC chip 302 can output the recovered energy to the excitation circuit 303 by using, for example, a VOUT pin.

Further, the NFC chip 302 can be configured to: obtain first energy in a case that the NFC antenna 301 senses a radio frequency field of the user terminal device, and provide a part of the first energy to the excitation circuit 303. The excitation circuit 303 can be configured to generate and send an excitation signal by using energy obtained from the NFC chip 302, wherein the excitation signal is used to excite the user terminal device to communicate with a device comprising the circuit unit 300.

Further, in the circuit unit 300, the NFC antenna 301 can be connected to the excitation circuit 303. In addition, the excitation circuit 303 can be configured to radiate the excitation signal to the user terminal device by using the NFC antenna.

In one or more embodiments of this specification, the NFC chip 302 can be communicatively connected to the excitation circuit 303. Specifically, the NFC chip 302 can sense a field strength state of the user terminal device by using the NFC antenna 301, and output a related signal (for example, an interrupt signal) to the excitation circuit 303.

More specifically, the NFC chip 302 can be further configured to: in a case that the NFC antenna 301 senses that the radio frequency field of the user terminal device is approaching, send an interrupt signal to the excitation circuit 303; and correspondingly, the excitation circuit 303 can be specifically configured to: based on a signal characteristic of the interrupt signal, generate and send an excitation signal in a case that it is determined that the user terminal device is in a low power card detection mode; and the excitation signal is used to switch the user terminal device in the low power card detection mode to a standard card detection mode.

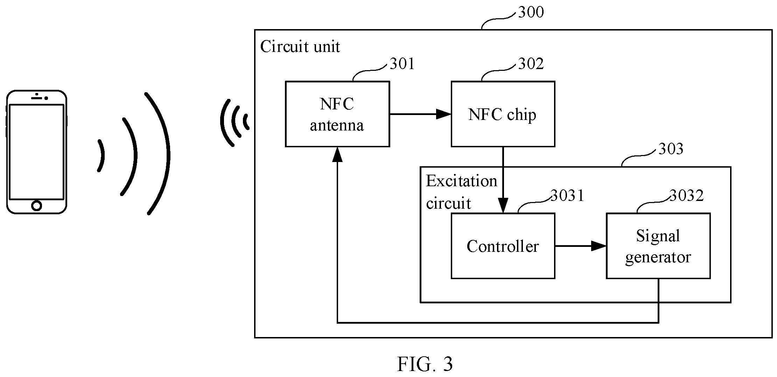

FIG. 3 is a detailed schematic diagram of a circuit unit 300 for implementing near field communication according to an embodiment of this specification.

As shown in FIG. 3, the circuit unit 300 for implementing near field communication can include an NFC antenna 301, an NFC chip 302, and an excitation circuit 303. Further, the excitation circuit 303 can include a controller 3031 and a signal generator 3032. When detecting a related interrupt signal and a condition is necessary, the controller 3031 can control, by using a hardware enable signal, the signal generator 3032 to enable field radiation excitation, so as to wake up a peer user terminal device.

Optionally, in a case of determining, based on the interrupt signal, that the peer user terminal device is in an LPCD state, the controller 3031 can control the signal generator 3032 to enable field radiation excitation.

Specifically, the controller 3031 can be configured to determine, by using energy obtained from the NFC chip 302 and according to a signal characteristic of the interrupt signal, whether the user terminal device is in a low power card detection mode; and send a hardware enable signal to the signal generator 3032 in a case that the user terminal device is in the low power card detection mode. Correspondingly, the signal generator 3032 can be configured to generate and send the excitation signal in response to the hardware enable signal by using energy obtained from the NFC chip 302.

In practice, the NFC chip 302 can be electrically connected to the excitation circuit 303, so as to provide energy to the excitation circuit 303. Specifically, the NFC chip 302 can be separately electrically connected to the controller 3031 and the signal generator 3032, so as to separately provide energy to the controller 3031 and the signal generator 3032.

The NFC chip 302 can be communicatively connected to the excitation circuit 303, so as to output an interrupt signal to the excitation circuit 303. Specifically, the NFC chip 302 can be communicatively connected to the controller 3031, and output an interrupt signal to the controller 3031. Further, the controller 3031 can execute a predetermined determining procedure, and in a case of determining that an excitation signal needs to be transmitted, output a hardware enable signal to the signal generator 3032, so the signal generator 3032 transmits an excitation signal.

In practice, the NFC chip 302 can communicate with the controller 3031 by using a communication interface such as I2C or SPI. In specific implementation, a software program can be injected into the NFC chip 302, so when obtaining a signal of an approaching radio frequency field based on sensing of the NFC antenna 301, the NFC chip 302 outputs an interrupt signal to the controller 3031, so the controller 3031 can learn of a characteristic of the radio frequency field.

An FM11NT082C chip from FMSH is used as an example. When detecting a field strength change, the NFC chip 302 can output a high-level interrupt to the controller 3031 by using an interrupt request (IRQ) pin, so as to establish communication between the NFC chip 302 and the controller 3031.

Specifically, the characteristic of the field strength signal of the radio frequency field transmitted by the user terminal device can be carried in the interrupt signal.

In practice, the signal characteristic of the interrupt signal can include at least one of a pulse width, a time period, or a pulse amplitude, and is not limited thereto. In practice, the determining whether the user terminal device is in the low power card detection mode can specifically include: determining, according to at least one of a pulse width, a time period, or a pulse amplitude of the interrupt signal, whether the user terminal device is in the low power card detection mode.

Specifically, a signal characteristic of interrupt request information sent by the NFC chip 302 can be used to reflect the characteristic of the radio frequency field of the user terminal device. When the user terminal device is in different card detection states, characteristics of the transmitted radio frequency fields are different. Therefore, characteristics of interrupt signals generated by the NFC chip and sent to the controller 3031 are different.

For example, compared with a standard card detection mode, when the user terminal device is in the LPCD mode, the pulse width of the signal of the transmitted radio frequency field is shorter, and correspondingly, the pulse width of the interrupt signal is shorter. For another example, compared with the standard card detection mode, when the user terminal device is in the LPCD mode, the time period of the signal of the transmitted radio frequency field is longer, and correspondingly, the time period of the interrupt signal is longer. For another example, compared with the standard card detection mode, when the user terminal device is in the LPCD mode, the pulse amplitude of the signal of the transmitted radio frequency field is weaker, and correspondingly, the pulse amplitude of the interrupt signal is weaker.

Further, to save energy, the controller 3031 can control the signal generator 3032 to enable field radiation excitation in a case of determining that information in the NFC chip 302 is not read.

In practice, if the NFC chip successfully communicates with the user terminal device, and the information in the NFC chip 302 is read by the user terminal device, the NFC chip outputs corresponding flag bit information according to program settings of the NFC chip. In practice, after receiving the interrupt signal, the controller 3031 can read the flag bit information from the NFC chip by using a communication interface (for example, a communication interface such as I2C or SPI), and further learn, based on the flag bit information, whether communication succeeds.

Specifically, the controller 3031 can be further configured to determine, by using the energy obtained from the NFC chip 302 and based on the flag bit information obtained from the NFC chip 302, whether communication between the user terminal device and the NFC chip 302 succeeds; and send a hardware enable signal to the signal generator 3032 in a case that the user terminal device is in the low power card detection mode and communication between the user terminal device and the NFC chip 302 fails. Correspondingly, the signal generator 3032 can generate and send the excitation signal in response to the hardware enable signal by using the energy obtained from the NFC chip 302.

That is, the excitation circuit 303 can be specifically configured to: in a case that it is determined, based on the signal characteristic of the interrupt signal, that the user terminal device is in the low power card detection mode and that communication between the user terminal device and the NFC chip fails, generate and send the excitation signal.

In one or more embodiments of this specification, an energy recovery circuit can be further disposed to further improve energy recovery efficiency of a radio frequency field provided by an NFC primary device working in an active mode.

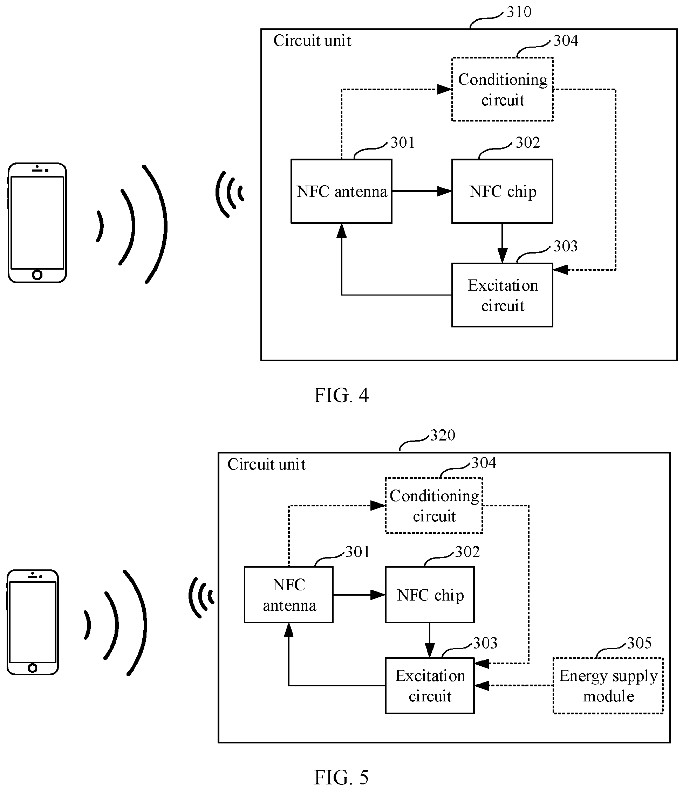

FIG. 4 is a schematic diagram of another circuit unit 310 for implementing near field communication according to an embodiment of this specification.

As shown in FIG. 4, the circuit unit 310 for implementing near field communication can include an NFC antenna 301, an NFC chip 302, and an excitation circuit 303. Further, the circuit unit 310 can further include a conditioning circuit 304, and the conditioning circuit 304 can be connected to the NFC antenna 301. In addition, the conditioning circuit 304 can be connected to the excitation circuit 303. Specifically, the conditioning circuit 304 can be configured to: obtain second energy in a case that the NFC antenna 301 senses a radio frequency field of a user terminal device, and provide at least a part of the second energy to the excitation circuit 303.

Specifically, a sine wave of 13.56 MHz that is sensed by the NFC antenna can be output by using the conditioning circuit 304 to the excitation circuit 303 in a later stage for use. The conditioning circuit 304 can be electrically connected to the excitation circuit 303, and more specifically, can be electrically connected to the controller 3031 and the signal generator 3032 to provide energy to the controller 3031 and the signal generator 3032.

In one or more embodiments of this specification, considering that a field period of LPCD is particularly short, optionally, an additional energy supply module can be added to supply power to the excitation circuit 303 as a supplement to power supply in a special period, so as to ensure completion of one communication period.

FIG. 5 is a schematic diagram of still another circuit unit 320 for implementing near field communication according to an embodiment of this specification.

As shown in FIG. 5, the circuit unit 320 for implementing near field communication can include an NFC antenna 301, an NFC chip 302, an excitation circuit 303, and a conditioning circuit 304. Further, the circuit unit 320 can further include an energy supply module 305, and the energy supply module 305 is connected to the excitation circuit 303 to provide third energy to the excitation circuit 303.

Optionally, the energy supply module 305 can be set as a rechargeable module. In a case that the rechargeable energy supply module 305 is disposed, energy recovered by the NFC chip 302 and the conditioning circuit 304 can be provided to the rechargeable energy supply module 305, and is further provided to the excitation circuit 303 when required, so as to improve energy utilization efficiency. In addition, the rechargeable energy supply module 305 can have an external charging interface, so as to obtain additional energy.

In practice, the energy supply module 305 can be specifically set as a button battery, a lithium battery, etc.

It is worthwhile to note that, a solution in which the energy supply module 305 configured to provide additional energy is disposed for the excitation circuit 303 is used in this embodiment of this specification and is different from a solution of an active NFC chip in a related technology. In the active NFC chip of the related technology, a power supply directly used to supply power to the NFC chip is generally disposed, instead of further disposing, on a basis of disposing the excitation circuit 303, a supplementary power supply used to supply power to the excitation circuit 303. In addition, in this embodiment of this specification, the energy supply module 305 functions as a supplementary power supply, and is used as a bottom line solution. In other words, even if the energy supply module 305 is not used, driving of the excitation circuit 303 can be implemented by recovering energy sensed by the NFC antenna, so as to wake up a peer device and increase a near field communication success rate.

In one or more embodiments of this specification, another antenna can be further disposed, so as to radiate the excitation signal generated by the excitation circuit 303.

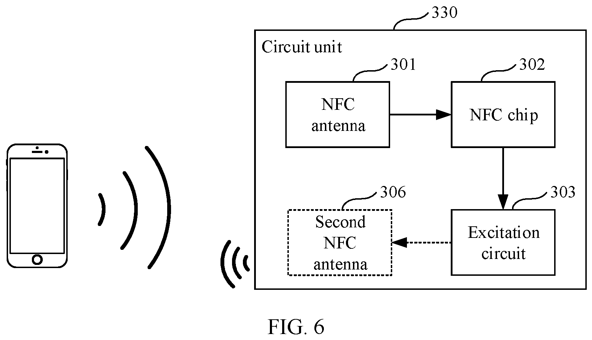

FIG. 6 is a schematic diagram of yet another circuit unit 330 for implementing near field communication according to an embodiment of this specification.

As shown in FIG. 6, the circuit unit 330 for implementing near field communication can include an NFC antenna 301, an NFC chip 302, and an excitation circuit 303. Further, the circuit unit 330 can further include a second NFC antenna 306, and the second NFC antenna 306 is connected to the excitation circuit 303. The excitation circuit 303 is configured to radiate the excitation signal to the user terminal device by using the second NFC antenna 306.

Different from the embodiment shown in FIG. 2, in the embodiment shown in FIG. 6, the excitation signal can be radiated by another disposed NFC antenna. The second NFC antenna 306 is disposed to radiate the excitation signal. In one aspect, a complex time division multiplexing design is not required, design is simpler, and signal transmission efficiency is also higher. In another aspect, an antenna is disposed additionally, and a shape, a location, etc. of the second NFC antenna can be disposed more flexibly than multiplexing an existing antenna, so radiation strength of the excitation signal is improved to a greater extent, and better inductive coupling to a peer user terminal device is implemented, so as to further increase a probability of waking up the user terminal device from an LPCD mode, thereby increasing a near field communication success rate.

FIG. 6 shows improvements based on the embodiment shown in FIG. 2, and transmitting the excitation signal by using the NFC antenna 301 is changed to transmitting the excitation signal by using the second NFC antenna 306. Optionally, the NFC antenna 301 and the second NFC antenna 306 can transmit the excitation signal together, so signal transmission efficiency can be further improved, and a probability of waking up the user terminal device from the LPCD mode can be increased, thereby increasing a near field communication success rate.

Similar to the improvements to the embodiment shown in FIG. 2 described in the above-mentioned embodiments, similar improvements can be made to the embodiments shown in FIG. 4 and FIG. 5.

Specifically, for the circuit unit 310 shown in FIG. 4, the second NFC antenna 306 can be further disposed as an improvement. Therefore, the excitation signal can be transmitted by using the second NFC antenna 306, or the excitation signal can be jointly transmitted by using the NFC antenna 301 and the second NFC antenna 306.

Similarly, for the circuit unit 320 shown in FIG. 5, the second NFC antenna 306 can be further disposed as an improvement. Therefore, the excitation signal can be transmitted by using the second NFC antenna 306, or the excitation signal can be jointly transmitted by using the NFC antenna 301 and the second NFC antenna 306.

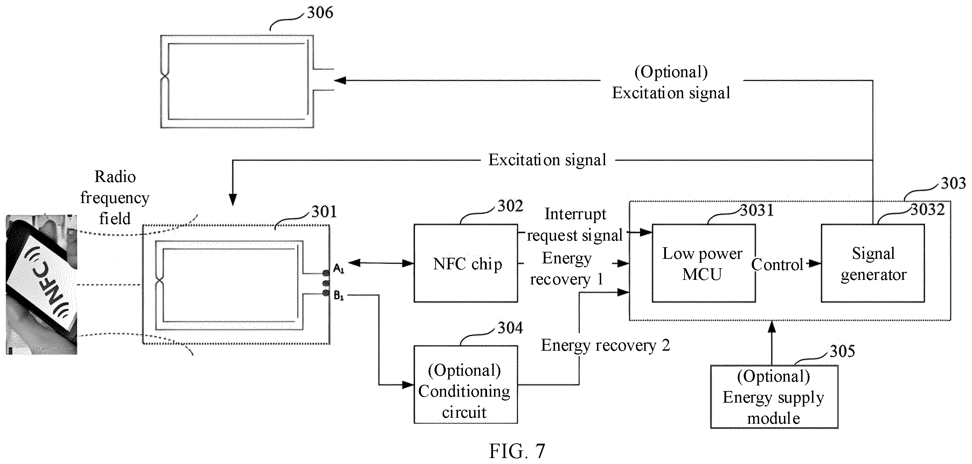

According to the above-mentioned description, an embodiment of this specification provides a scenario schematic diagram of an actual application scenario in which a circuit unit for implementing near field communication and a user terminal device working in an active mode perform near field communication according to an embodiment of this specification, as shown in FIG. 7.

As shown in FIG. 7, the circuit unit can include an NFC antenna 301, an NFC chip 302, and an excitation circuit 303. The excitation circuit 303 can specifically include a controller 3031 and a signal generator 3032. When the user terminal device working in the active mode approaches the NFC antenna 301, the NFC antenna 301 senses approaching of a radio frequency field. In one aspect, the NFC chip 302 connected to the NFC antenna 301 can output a part of energy recovered from the NFC antenna 301 to the excitation circuit 303; and in another aspect, can generate an interrupt signal according to a change of a field signal sensed by the NFC antenna 301 and send same to the excitation circuit 303, so the excitation circuit 303 sends an excitation signal in a case of determining, based on the interrupt signal, that a predetermined condition is satisfied, and performs radiation by using the NFC antenna 301, so the user terminal device is woken up from an LPCD mode. Specifically, the excitation signal can be radiated by using the NFC antenna 301, or the excitation signal can be radiated by using an additionally disposed second NFC antenna 306.

Optionally, to increase a recovery rate of the energy of the radio frequency field transmitted by the user terminal device working in the active mode, a conditioning circuit 304 connected between the NFC antenna 301 and the excitation circuit 303 can be disposed. The conditioning circuit 304 is configured to: in a process in which the NFC antenna 301 senses a radio frequency field, collect energy of the radio frequency field and output the energy to the excitation circuit 303.

In practice, in a case that energy recovery is performed by using both the NFC chip 302 and the conditioning circuit 304, the energy recovery rate can be greatly increased. For example, in a process in which a radio frequency field approaches, energy of approximately 30 mW-50 mW (1.8 V, 16 mA-28 mA) can be recovered and provided to the excitation circuit 303 in a later stage for use

Further, the controller 3031 can include a low power microcontroller unit (MCU). Generally, the low power MCU has a sleep power consumption at a uA level and a working capability of tens of uA@1 MHz (for example, N32L40 series of Nations Technologies Inc. and related MCUs of ST). Generally, the low power MCU works at about 40 MHz, and can be controlled at about 3.6 mW-7.2 mW (1.8 V, 2-4 mA).

In practice, when a passive load change of the NFC chip 302 by using the NFC antenna 301 cannot directly wake up the peer device, resulting in a communication obstruction, the energy recovered by the NFC chip 302 and the conditioning circuit 304 can be provided for the low power MCU to work. Specifically, when a field signal is approaching the NFC antenna 301, the NFC chip 302 and the conditioning circuit 310 can start to recover and provide energy for the low power MCU to work, so the low power MCU works in a low power state. Then, after detecting that the field sends the interrupt signal, the NFC chip 302 wakes up the low power MCU from the low power state. The low power MCU can further determine a working state of the peer device according to comprehensive information such as a pulse width, a time period, and a pulse amplitude of the interrupt signal. If it is determined that the peer device is in the LPCD state, the low power MCU can control the signal generator to transmit an active field of 13.56 M to wake up the peer device to complete a next step of communication, thereby increasing a communication success rate.

Further, the signal generator 3032 can include an active crystal or an RC oscillation circuit, and is mainly configured to generate a signal field of about 12-14 MHz, and power consumption thereof is approximately 3.6 mW-5.4 mW (1.8 V, 2-3 mA). Specifically, under control of the controller 3031, the signal generator 3032 can transmit the generated signal field to the antenna for external radiation by using a link. Optionally, the signal field can be transmitted to the NFC antenna 301 for external radiation (time division multiplexing of the NFC antenna 301), as shown in FIG. 2 to FIG. 5. Or optionally, the signal field can be transmitted to the second NFC antenna 306 for external radiation, as shown in FIG. 6.

In one or more embodiments of this specification, the frequency of the active field radiated outward based on the excitation signal provided by the signal generator 3032 can be tuned to be consistent with the frequency of the radio frequency field of the user terminal device, that is, resonance at multiple points. Specifically, the frequency can be set to 12-14 MHz. More specifically, the frequency can be set to about 13.56 MHz.

In one or more embodiments of this specification, the NFC antenna 301 in the circuit unit (including the circuit unit 300, 310, 320, or 330) can be further optimized.

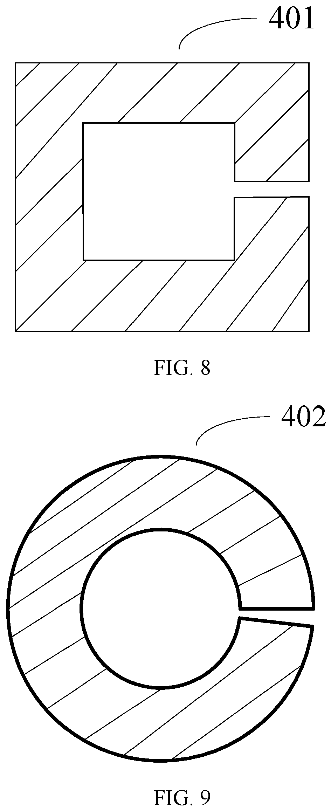

FIG. 8 is a schematic structural diagram of a metal sheet used for an NFC antenna according to an embodiment of this specification.

In a circuit unit for implementing near field communication, the NFC antenna 301 can include a metal sheet 401 shown in FIG. 8. The metal sheet 401 can be bent in a plane in which the metal sheet 401 is located, so two ends of the metal sheet 401 in a length direction are close to each other and form slot space.

FIG. 9 is a schematic structural diagram of another metal sheet used for an NFC antenna according to an embodiment of this specification.

In a circuit unit for implementing near field communication, the NFC antenna 301 can include a metal sheet 402 shown in FIG. 9. Similar to FIG. 8, the metal sheet 402 can be bent in a plane in which the metal sheet 402 is located, so two ends of the metal sheet 402 in a length direction are close to each other and form slot space.

Specifically, the metal sheet shown in FIG. 8 and FIG. 9 can be different from a conventional metal wire coil structure used in the NFC antenna 301, and a metal sheet bent into a ring within a plane is used. In practice, an intermediate region surrounded by the metal sheet 401 or 402 can be used to place the NFC chip 302. A relative position between the NFC chip 302 and the metal sheet 401 or 402 can be not limited thereto.

It can be understood that FIG. 8 and FIG. 9 merely provide two specific examples of the metal sheet. In practice, a shape of the metal sheet can be not limited to a circle or a rectangle, or can be a polygon or an irregular shape. A bending form of the metal sheet can be set according to actual needs, for example, to perform adaptive adjustment for a spatial location at which the NFC chip is installed.

Further, the metal sheet can be made of a conventional metal used as a communication antenna. For example, copper can be used.

Optionally, in practice, the metal sheet can be used instead of a metal coil as the NFC antenna. Specifically, the two ends of the metal sheet in the length direction can be used as feed points of the NFC antenna 301. In practice, the NFC antenna 301 can implement a connection to the NFC chip 302 by using the feed points.

Optionally, in practice, the metal sheet and the metal coil can be combined for use in the NFC antenna 301. Specifically, the metal coil may include a feed point connected to the NFC chip 302, and the metal sheet may not include a feed point.

Different from a conventional wire-like metal coil, in this embodiment of this specification, an NFC antenna can be disposed as a metal ring with a large area on a plane in which an antenna body is located. Therefore, an equivalent inductance value of the antenna can be increased. For example, 500 nH-2 uH can be reached. With such an inductance value, when a resonance circuit whose resonance point is about 13.56 MHz can be formed by matching with a capacitor, radiation energy is relatively large, and a proper capacitor can be found to match the resonance circuit.

Therefore, in one aspect, a capability of waking up the user terminal device from the LPCD state can be improved by affecting induction load of the peer user terminal device. In another aspect, energy recovery efficiency can be improved. In still another aspect, intensity and efficiency of radiating an excitation signal by using the NFC antenna 301 can be improved. In conclusion, a communication success rate can be increased when the NFC secondary device performs near field communication with the user terminal device.

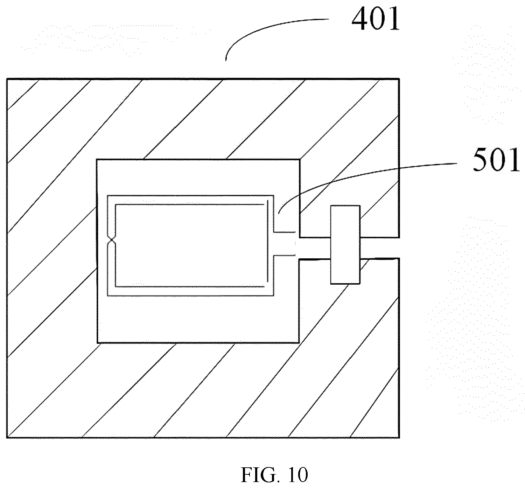

FIG. 10 is a schematic diagram of an NFC antenna including a metal sheet and a metal coil according to an embodiment of this specification.

Specifically, in a circuit unit for implementing near field communication, the NFC antenna 301 includes a metal sheet (for example, the metal sheet 401 shown in FIG. 8 or the metal sheet 402 shown in FIG. 9). Further, the NFC antenna 301 can further include a metal coil. The metal coil can be located in the same plane as the metal sheet, and the metal coil can be located in a region surrounded by the metal sheet after being bent.

As shown in FIG. 10, the metal coil 501 can be located in a region surrounded by the metal sheet 401 after being bent. In practice, the NFC chip 302 can be further disposed in a region surrounded by the metal coil 501.

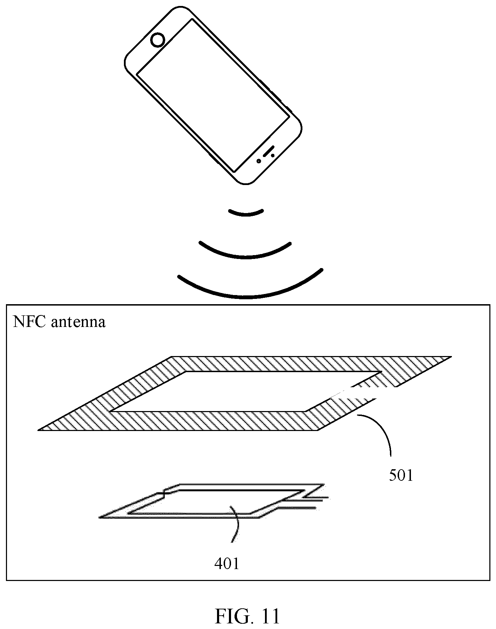

FIG. 11 is a schematic diagram of another NFC antenna including a metal sheet and a metal coil according to an embodiment of this specification.

Specifically, in a circuit unit for implementing near field communication, in a case that the NFC antenna 301 includes a metal sheet (for example, the metal sheet 401 shown in FIG. 8 or the metal sheet 402 shown in FIG. 9), the NFC antenna 301 can further include a metal coil, and the metal coil can overlap with the metal sheet. The metal sheet can be closer to a scanned side of a device including the circuit unit than the metal coil.

As shown in FIG. 11, the metal sheet 401 can be disposed closer to the scanned side of the device including the circuit unit than the metal coil 501.

In practice, the metal sheet is disposed to be nested or overlapped with the metal coil in the NFC antenna module, so an annular metal sheet can play an amplifier role, thereby improving transmit efficiency and strength of a signal, thereby increasing a success rate of waking up the user terminal device from an LPCD mode, and further increasing a near field communication success rate.

In addition, in this embodiment of this specification, to enable the NFC antenna to be better coupled to an antenna of a peer user terminal device, a matching circuit (for example, a specific capacitance value is connected in parallel) can be disposed to tune the NFC antenna to a transmit frequency band of 13.56 MHz (12-14 MHz), so as to implement better coupling with the antenna of the peer user terminal device and enhance energy conversion efficiency.

In one or more embodiments of this specification, similar to the NFC antenna 301, when the second NFC antenna 306 is used in a circuit module, a metal sheet can also be used in the second NFC antenna 306.

Specifically, in a circuit unit for implementing near field communication, the included second NFC antenna 306 can include a metal sheet, and the metal sheet is bent in a plane in which the metal sheet is located, so two ends of the metal sheet in a length direction are close to each other and form slot space. For example, the metal sheet can be the metal sheet 401 shown in FIG. 8 or the metal sheet 402 shown in FIG. 9, and a shape of the metal sheet is not limited thereto.

Optionally, in practice, the metal sheet can be used instead of a metal coil as the NFC antenna. Specifically, the two ends of the metal sheet in the length direction can be used as feed points of the second NFC antenna 306. In practice, the second NFC antenna 306 can implement a connection to the NFC chip 302 by using the feed points.

Optionally, in practice, the metal sheet and the metal coil can be combined for use in the second NFC antenna 306. Specifically, the metal coil may include a feed point connected to the NFC chip 302, and the metal sheet may not include a feed point.

Further, optionally, in a circuit unit for implementing near field communication, the NFC antenna 306 includes a metal sheet (for example, the metal sheet 401 shown in FIG. 8 or the metal sheet 402 shown in FIG. 9). Further, the second NFC antenna 306 can further include a metal coil. The metal coil can be located in the same plane as the metal sheet, and the metal coil can be located in a region surrounded by the metal sheet after being bent.

As shown in FIG. 10, the metal coil 501 can be located in a region surrounded by the metal sheet 401 after being bent. In practice, the NFC chip 302 can be further disposed in a region surrounded by the metal coil 501.

Further, optionally, in a circuit unit for implementing near field communication, in a case that the NFC antenna 301 includes a metal sheet (for example, the metal sheet 401 shown in FIG. 8 or the metal sheet 402 shown in FIG. 9), the second NFC antenna 306 can further include a metal coil, and the metal coil can overlap with the metal sheet. The metal sheet can be closer to a scanned side of a device including the circuit unit than the metal coil.

As shown in FIG. 11, the metal sheet 401 can be disposed closer to the scanned side of the device including the circuit unit than the metal coil 501.

In practice, the metal sheet is disposed to be nested or overlapped with the metal coil in the NFC antenna module (for example, the NFC antenna 301 or the second NFC antenna 306), so an annular metal sheet can play an amplifier role, thereby improving transmit efficiency and strength of a signal, thereby increasing a success rate of waking up the user terminal device from an LPCD mode, and further increasing a near field communication success rate.

Various technical features in the previous embodiments can be combined randomly, provided that the combinations of the features do not conflict or contradict, and the combinations are not described one by one here due to length limitation. Therefore, any combination of the various technical features in the previous implementations also falls within the scope disclosed in this specification.

In one or more embodiments of this specification, an NFC device corresponding to the circuit unit for implementing near field communication is further provided. The NFC device can include any circuit unit provided in the above-mentioned embodiments of this specification.

Specifically, the NFC device can include a circuit unit for implementing near field communication. The circuit unit can include an NFC antenna 301, an NFC chip 302, and an excitation circuit 303. The NFC chip 302 is connected to the NFC antenna 302, and the NFC chip 302 is connected to the excitation circuit 303.

The NFC chip 302 can be configured to: obtain first energy in a case that the NFC antenna 301 senses a radio frequency field of a user terminal device, and provide a part of the first energy to the excitation circuit.

The excitation circuit 303 can be configured to generate and send an excitation signal by using the energy obtained from the NFC chip 302, where the excitation signal is used to excite the user terminal device to communicate with the NFC device.

In this embodiment of this specification, the NFC device works in a passive mode, and the user terminal device that communicates with the NFC device works in an active mode.

It is worthwhile to note that the technical solution of the NFC device and the technical solution of the above-mentioned circuit unit belong to the same concept. For details not described in detail in the technical solution of the NFC device, refer to the above-mentioned technical solution of the circuit unit.

Some embodiments of this specification are described in a progressive way. For same or similar parts of the embodiments, mutual references can be made to the embodiments. Each embodiment focuses on differences from other embodiments. The device provided in this embodiment of this specification includes an embodiment of a circuit unit for implementing near field communication. Therefore, the device also has a beneficial technical effect similar to that of the embodiment of the circuit unit for implementing near field communication. Because the above-mentioned describes in detail the beneficial technical effect of the embodiment of the circuit unit for implementing near field communication, the beneficial technical effect of the device is not described here again.

Specific embodiments of this specification are described above. Other embodiments fall within the scope of the appended claims. In some cases, the actions or steps described in the claims can be performed in an order different from that in the embodiments, and the desired results can still be achieved. In addition, processes described in the accompanying drawings do not necessarily need a specific order or a sequential order shown to achieve the desired results.

It should be further noted that, the terms "include", "comprise", or any other variant thereof are intended to cover a non-exclusive inclusion, so a process, a method, or a device that includes a list of elements not only includes those elements but also includes other elements which are not expressly listed, or further includes elements inherent to such a process, method, or device. Without more constraints, an element preceded by "includes a ..." does not preclude the existence of additional identical elements in the process, method, product or device that includes the element.

The above-mentioned descriptions are merely some embodiments of this specification, and are not intended to limit this specification. A person skilled in the art can make various changes and variations to this specification. Any modification, equivalent replacement, or improvement made without departing from the spirit and principle of this specification shall fall within the scope of the claims in this specification.

## Claims

1. A circuit unit for implementing near field communication, comprising an NFC antenna, an NFC chip, and an excitation circuit, wherein the NFC antenna is connected to the NFC chip, and the NFC chip is connected to the excitation circuit;
the NFC chip is configured to: obtain first energy in a case that the NFC antenna senses a radio frequency field of a user terminal device, and provide a part of the first energy to the excitation circuit; and
the excitation circuit is configured to generate and send an excitation signal by using energy obtained from the NFC chip, wherein the excitation signal is used to excite the user terminal device to communicate with a device comprising the circuit unit.

2. The circuit unit according to claim 1, wherein the NFC antenna is connected to the excitation circuit; and the excitation circuit is configured to radiate the excitation signal to the user terminal device by using the NFC antenna.

3. The circuit unit according to claim 1, wherein the circuit unit further comprises a second NFC antenna, and the second NFC antenna is connected to the excitation circuit; and the excitation circuit is configured to radiate the excitation signal to the user terminal device by using the second NFC antenna.

4. The circuit unit according to claim 1, wherein
the NFC chip is further configured to: in a case that the NFC antenna senses the radio frequency field of the user terminal device, send an interrupt signal to the excitation circuit; and
the excitation circuit is specifically configured to: based on a signal characteristic of the interrupt signal, generate and send an excitation signal in a case that it is determined that the user terminal device is in a low power card detection mode; and the excitation signal is used to switch the user terminal device in the low power card detection mode to a standard card detection mode.

5. The circuit unit according to claim 4, wherein the excitation circuit comprises a controller and a signal generator;
the controller is configured to determine, by using the energy obtained from the NFC chip and according to the signal characteristic of the interrupt signal, whether the user terminal device is in the low power card detection mode; and send a hardware enable signal to the signal generator in a case that the user terminal device is in the low power card detection mode; and
the signal generator is configured to generate and send the excitation signal in response to the hardware enable signal by using the energy obtained from the NFC chip.

6. The circuit unit according to claim 5, wherein
the controller is further configured to determine, by using the energy obtained from the NFC chip and based on flag bit information obtained from the NFC chip, whether communication between the user terminal device and the NFC chip succeeds; and send a hardware enable signal to the signal generator in a case that the user terminal device is in the low power card detection mode and communication between the user terminal device and the NFC chip fails.

7. The circuit unit according to claim 1, wherein the circuit unit further comprises a conditioning circuit, and the conditioning circuit is connected to the NFC antenna and the excitation circuit; and
the conditioning circuit is configured to: obtain second energy in a case that the NFC antenna senses the radio frequency field of the user terminal device, and provide at least a part of the second energy to the excitation circuit.

8. The circuit unit according to claim 1, wherein the circuit unit further comprises an energy supply module, and the energy supply module is connected to the excitation circuit and configured to provide third energy to the excitation circuit.

9. The circuit unit according to claim 1, wherein the NFC antenna comprises a metal sheet, and the metal sheet is bent in a plane in which the metal sheet is located, so two ends of the metal sheet in a length direction are close to each other and form slot space.

10. The circuit unit according to claim 9, wherein the two ends of the metal sheet in the length direction are used as feed points of the NFC antenna.

11. The circuit unit according to claim 9, wherein the NFC antenna further comprises a metal coil, the metal coil and the metal sheet are located in a same plane, and the metal coil is located in a region surrounded by the metal sheet after being bent.

12. The circuit unit according to claim 9, wherein the NFC antenna further comprises a metal coil, and the metal coil overlaps the metal sheet; and the metal sheet is closer to a scanned side of the device comprising the circuit unit than the metal coil.

13. The circuit unit according to claim 3, wherein the second NFC antenna comprises a metal sheet, and the metal sheet is bent in a plane in which the metal sheet is located, so two ends of the metal sheet in a length direction are close to each other and form slot space.

14. The circuit unit according to claim 13, wherein the two ends of the metal sheet in the length direction are used as feed points of the second NFC antenna.

15. An NFC device, wherein the NFC device comprises the circuit unit according to any one of claims 1 to 14.
